# EUROPÄISCHE PATENTSCHRIFT

(11) **EP 0 361 012 B1**
(45) Veröffentlichungstag und Bekanntmachung des Hinweises auf die Patenterteilung: **10.02.1993**
(21) Anmeldenummer: 89113571.7
(22) Anmeldetag: 24.07.1989
(51) Int. Cl.: F28D 5/00, B64G 1/50

(54) **Verdampfungswärmetauscher**
Evaporative heat exchanger
Echangeur de chaleur à évaporation

(30) Priorität: 21.09.1988 DE 3832005
(43) Veröffentlichungstag der Anmeldung: 04.04.1990
(73) Patentinhaber: ERNO Raumfahrttechnik Gesellschaft mit beschränkter Haftung, D-28199 Bremen (DE)
(72) Erfinder: Leidinger, Bernhard, Dr.-Ing., D-2805 Stuhr 1 (DE)
(74) Vertreter: Schramm, Ewald Werner Josef

(56) Entgegenhaltungen:
- FR-A- 2 357 986
- US-A- 2 766 597

## Beschreibung

Die Erfindung betrifft einen Verdampfungswärmetauscher gemäß dem Oberbegriff des Anspruches 1.

Ein derartiger Verdampfungswärmetauscher ist aus den Druckschriften "Shuttle Orbiter Flash Evaporator", J.R. Nason, Hamilton Standard, 79-ENAS-14 und "Shuttle Orbiter Water Spray Boiler", E.W. O'Connor, Hamilton Standard bekannt.

Zur Wärmeabfuhr bei Raumfahrzeugen, die sich in der Auf- und Abstiegsphase durch die Erdatmosphäre befinden, oder die in der Erdumlaufbahn extremen thermischen Belastungen ausgesetzt sind, eignen sich Kühleinrichtungen, bei denen eine Kühlflüssigkeit an Wärmetauscheroberflächen verdampft.

In einem solchen Verdampfungskühler wird das zu kühlende Medium, welches in der Regel das Fluid eines aktiven Kühlkreislaufs ist, über einen speziellen Wärmetauscher mit dem in einem mitgeführten Vorratsbehälter gelagerten zu verdampfenden Medium in Verbindung gebracht. Der entstehende Dampf wird aus dem Raumfahrzeug in seine Umgebung abgeblasen.

Bei der beschriebenen Anwendung eines solchen Verdampfungskühlers unter Schwerelosigkeit sowie bei unterschiedlichen Beschleunigungen während der Startund Landephase besteht grundsätzlich das Problem, das zu verdampfende Medium mit der zu kühlenden Wandpartie so in Kontakt zu bringen, daß eine ausreichend hohe Wärmeübertragung stattfindet. Da das zu verdampfende Medium auf Kosten zusätzlicher Nutzlast im Raumfahrzeug mitgeführt wird, ist zudem seine möglichst vollständige Nutzung in Form einer Verdampfung anzustreben. Dazu muß der entstehende Dampf von dem unverdampften Teil getrennt werden, um zu verhindern, daß letzterer in Form von größeren Flüssigkeitstropfen, ohne zur Kühlung beigetragen zu haben, mit dem bereits verdampften Teil aus dem Raumfahrzeug ausgeblasen wird. Fehlt die Schwerkraft teilweise oder ganz und/oder unterliegt das Raumfahrzeug wechselnden Bahnbeschleunigungen, so muß eine andere Kraft die Schwerkraft ersetzen und das zu verdampfende Medium mit der wärmeabgebenden Wand in Kontakt halten.

Aus den oben genannten Druckschriften "Shuttle Orbiter Flash Evaporator", J.R. Nason, Hamilton Standard, 79-ENAS-14 und "Shuttle Orbiter Water Spray Boiler", E.W. O'Connor, Hamilton Standard ist bekannt, daß die fehlende Wirkung der Schwerkraft durch die Reaktionskraft eines auf die zu kühlende Fläche auftreffenden Strahls einer zu verdampfenden Flüssigkeit ersetzt werden kann, wobei dieser Strahl auch aus einer Vielzahl diskreter Tropfen bestehen kann. Nachteilig bei dieser Anordnung ist, daß ein gewisser Anteil der zu verdampfenden Flüssigkeit für Kühlzwecke ungenutzt mit dem Dampf aus dem Raumschiff befördert wird.

Der Erfindung liegt die Aufgabe zugrunde, einen Verdampfungswärmetauscher der eingangs genannten Art verfügbar zu machen, mit dem eine möglichst vollständige Nutzung des zu verdampfenden Mediums erreicht wird.

Erfindungsgemäß wird diese Aufgabe durch die im Anspruch 1 gekennzeichneten Merkmale gelöst.

Bevorzugte vorteilhafte Ausgestaltungen der Erfindung sind durch die Merkmale der Unteransprüche gekennzeichnet.

Zwar ist aus der US-A-2 766 597 ein Verdampfungswärmetauscher mit einem aktiven Flüssigkeitskühlkreislauf bekannt, bei dem die Kühlflüssigkeit durch Rohre geleitet wird, die über ein umgebendes Kapillarsystem von außen mit einer zweiten Flüssigkeit benetzt werden und bei dem diese zweite Flüssigkeit durch einen quer zu den Rohren verlaufenden Luftstrom verdampft werden soll. Anders als bei dem Wärmetauscher nach der Erfindung wird das zu verdampfende Medium bei dieser bekannten Vorrichtung jedoch nicht durch einen adiabatischen Entspannungsvorgang auf die Oberflächen des den aktiven Flüssigkeitskühlkreislaufs enthaltenden Rohrsystems gesprüht, sondern es wird durch separate Zuleitungen direkt auf diese Oberfläche geleitet, wodurch ein zusätzliches System separater Zuleitungen erforderlich ist, um jedes der Rohre eines aktiven Flüssigkeitskühlkreislaufs mit dem zu verdampfenden Fluid zu benetzen.

In der Zeichnung sind Ausführungsbeispiele der Erfindung schematisch dargestellt. Es zeigen:
- Fig. 1: eine Schnittansicht eines Verdampfungswärmetauschers mit drei separaten Flüssigkeitskühlkreisläufen,
- Fig. 2: eine stark schematisierte Draufsicht einer ersten Ausbildung einer Kühlröhrchen-Anordnung,
- Fig. 3: eine stark schematisierte Draufsicht auf eine zweite Ausbildung einer Kühlröhrchen-Anordnung,
- Fig. 4: eine stark schematisierte Draufsicht einer dritten Ausbildung einer Kühlröhrchen-Anordnung.

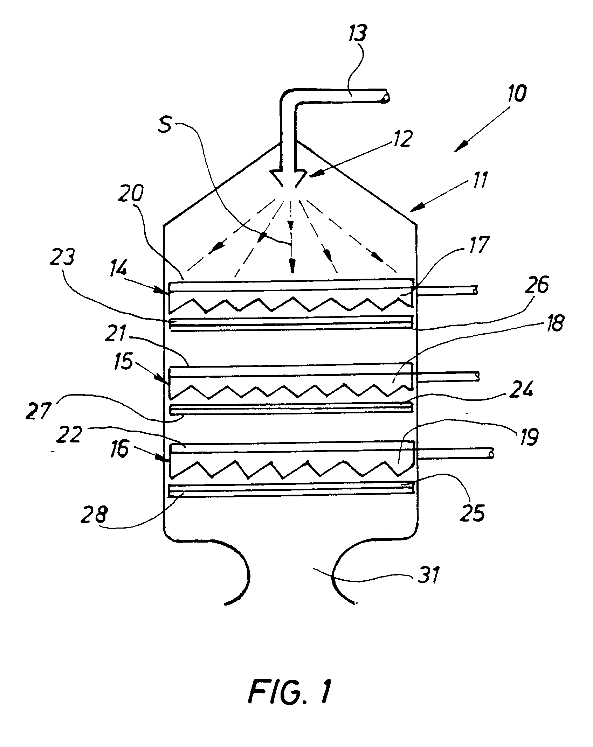

Gemäß Figur 1 ist ein dreistufiger Verdampfungswärmetauscher 10 dargestellt, der aus einer Kammer 11 besteht, in die aus einer Sprüheinrichtung 12, vorzugsweise mit wenigstens einer Sprühdüse, ein zu verdampfendes Medium eingesprüht wird, welches über eine Speiseleitung 13 zugeführt wird.

Das zu verdampfende Medium besteht beispielsweise aus Wasser oder Ammoniak. Bei Verwendung von Wasser herrscht in der Speiseleitung 13 ein Druck von etwa 1 bar und eine Temperatur von etwa 25° C, während bei Ammoniak ein Druck von etwa 7,2 bar und eine Temperatur von etwa 18° C vorliegen, wenn die Verdampfung bei einem Druck in der Kammer von weniger als 0,5 bar erfolgt.

Herrscht in der Kammer 11 ein Druck, der größer als 0,5 bar und kleiner als 1 bar ist, beträgt der Wasserdruck etwa 1,2 bar, während bei Ammoniak dieselben Druck- und Temperaturverhältnisse wie zuvor erwähnt existieren.

Das zu verdampfende Medium kann zeitlich intermittierend, beispielsweise pulsierend, verteilt werden, um eine optimale und an die jeweiligen Lastverhältnisse angepaßte Versprühung zu erreichen. Zur Verteilungsverbesserung ist ein sich bei der Entspannung in der Sprüheinrichtung 12 entmischendes Gas, beispielsweise CO₂, vorgesehen. Außerdem weist das zu verdampfende Medium zur Benetzungsverbesserung der noch nachfolgend zu beschreibenden wärmeübertragenden Oberflächen ein Benetzungsmittel auf, beispielsweise ein Mittel zur Verringerung der Oberflächenspannung einer Flüssigkeit, wie ein Spülmittel, ein Waschmittel oder aber ein im Fotohandel als Netzmittel vertriebenes Produkt.

In nicht dargestellter Weise ist in jede Sprüheinrichtung 12 ein mechanisches Druckerhöhungssystem integriert, das beispielsweise eine Kolbenhubpumpe aufweist.

In der Kammer 11 sind in der durch einen Pfeil S bezeichneten Anströmrichtung des aus der Sprüheinrichtung 12 austretenden Mediums hintereinander drei separate Flüssigkeitskühlkreisläufe 14, 15 und 16 angeordnet, die jeweils eine eigene, nicht dargestellte Flüssigkeitsspeisung besitzen. Selbstverständlich kann die Kammer 11 alternativ auch nur einen, zwei oder mehr als drei Flüssigkeitskühlkreisläufe aufweisen.

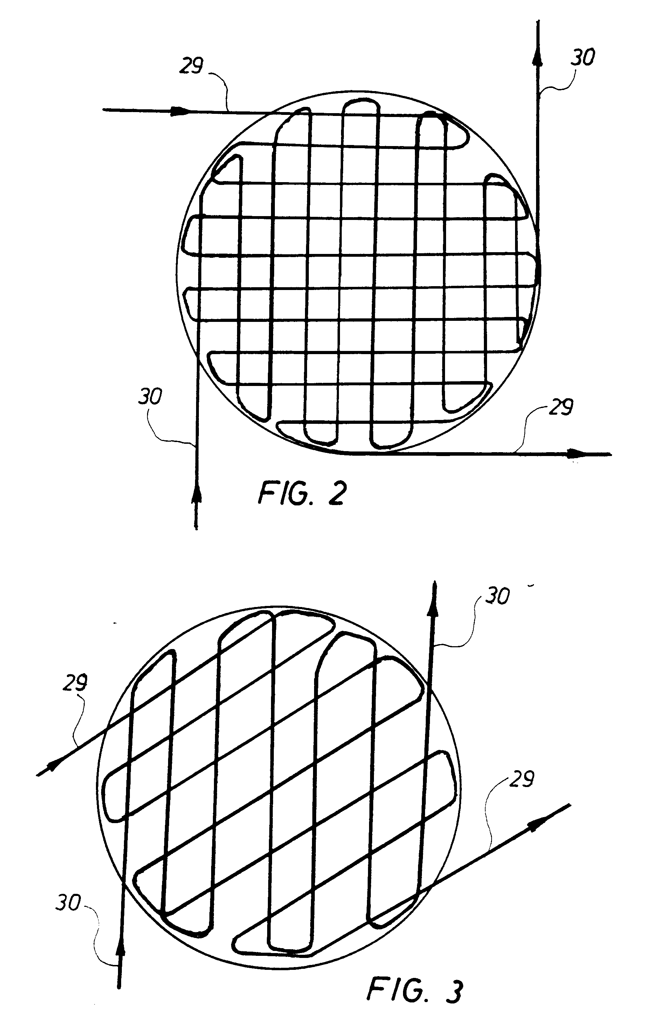

Die Kammer 11 besitzt einen runden Querschnitt. Die Flüssigkeitskühlkreisläufe 14, 15 und 16 weisen jeweils eine Kühlröhrchen-Anordnung 17,18 und 19 auf, die sich senkrecht zur Längsachse der Kammer 11 mit rundem Außenumfang erstreckt. Ausführungsbeispiele für verschiedene Kühlröhrchen-Anordnungen sind in Fig. 2 bis 4 näher dargestellt.

Aufgrund der Orientierung der Kühlröhrchen-Anordnungen 17,18 und 19 in der Kammer 11 werden diese von dem zu verdampfenden Medium quer angeströmt.

Jede Kühlröhrchen-Anordnung 17,18 und 19 ist mit einer das Medium bis zu dessen Verdampfen haltenden Kapillarstruktur versehen. Diese Kapillarstruktur ist entweder in nicht dargestellter Weise unmittelbar in die wärmeübertragende Oberfläche der Kühlröhrchen-Anordnung eingebracht, beispielsweise in Form feiner Riefen, Rillen oder einer durch Sandstrahlen erzeugten Oberflächenrauhigkeit, oder aber sie wird von einer membranartigen Kapillarschicht 20, 21, 22 gebildet, welche in Anströmrichtung des zu verdampfenden Mediums vor der siebartigen Kühlröhrchen-Anordnung 17,18 und 19 in paralleler Zuordnung und jeweils in Berührung mit dieser vorgesehen ist.

Die Kapillarschicht 20, 21, 22 ist in der Lage, Flüssigkeit zu halten. Sie besitzt eine Dicke von wenigen µm, wie Papier oder dünner Stoff, und besteht beispielsweise aus einem Stück Stoff, das sich wie ein Filz mit dem zu verdampfenden Medium vollsaugt und stets benetzt ist. Die membranartige Kapillarschicht 20,21,22 ist über die Kühlröhrchen-Anordnung 17,18,19 direkt beheizbar.

In Anströmrichtung des zu verdampfenden Mediums ist hinter jeder Kühlröhrchen-Anordnung 17,18,19 jeweils eine Flüssigkeit abweisende Kapillarschicht 23,24,25 vorgesehen, die parallel zur Kapillarschicht 20,21,22 angeordnet ist. Diese membranartige Kapillarschicht 23,24,25 ist dampfdurchlässig und besitzt ebenfalls eine Dicke von wenigen µm. Sie besteht beispielsweise PTFE Mikrofilterlaminat auf Polypropylene Vlies, wobei Porendurchmesser von etwa 0,1 bis 1 µm vorliegen.

Für jede Kapillarschicht 23,24,25 ist jeweils eine siebartige Stützeinrichtung 26,27,28 vorgesehen, die die Stabilität der membranartigen Kapillarschicht 23,24,25 verbessert.

Bei den in der zylinderförmigen Kammer 11 angeordneten Kühlröhrchen-Anordnungen 17,18,19 können die Kapillarschichten 20,21,22 sowie die Kapillarschichten 23,24,25 auch nur an der letzten Kühlröhrchen-Anordnung 19 vorgesehen sein, oder es kann nur eine Kapillarschicht 22 oder eine Kapillarschicht 25 an der Anordnung 19 vorhanden sein.

Die Ausbildung der Kühlröhrchen-Anordnungen 17,18 und 19 ist beispielsweise so getroffen, wie in den Figuren 2 bis 4 gezeigt. Wesentlich ist dabei, daß wenigstens zwei separate, sich kreuzende Rohrleitungen 29,30 vorgesehen sind, die den kreisrunden Kammerquerschnitt gitternetzartig ausfüllen. Die Einlaß- und die Auslaßrichtungen jeder Rohrleitung 29,30 sind mit einem Richtungspfeil gekennzeichnet.

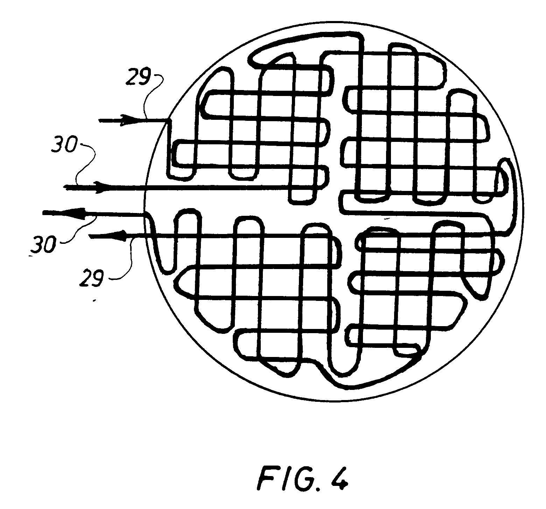

Jede Rohrleitung 29,30 weist parallele Rohrleitungsabschnitte auf, die über Umlenkabschnitte miteinander verbunden sind. In Fig. 2 ist eine Ausgestaltung dargestellt, bei der die Rohrleitungen 29,30 sich nahezu stets unter einem rechten Winkel kreuzen. In Fig. 3 kreuzen sich die Rohrleitungen 29,30 nahezu stets unter einem spitzen Winkel, während in Fig. 4 eine quadrantenweise Anordnung vorgesehen ist, bei der sich in jedem Kreisflächenquadranten ein nahezu stets rechtwinkliges Kreuzen der Rohrleitungen 29,30 ergibt.

Wenn das zu verdampfende Medium über die Speiseleitung 13 und die Sprüheinrichtung 12 in die Kammer 11 eingesprüht wird, durchtritt es nacheinander die Kühlröhrchen-Anordnungen 17,18 und 19 mit dem jeweils zugeordneten Kapillarschichten 20,21,22 und 23,24,25 nebst zugehörigen siebartigen Stützeinrichtungen 26,27,28, und es wird dadurch eine nahezu vollständige Nutzung des zu verdampfenden Mediums bis zu dessen Austritt an einem Dampfauslaß 31 der Kammer 11 erreicht.

## Patentansprüche

1. Verdampfungswärmetauscher (10) zur Abführung von Wärme in Raumfahrzeugen unter Schwerelosigkeit, sowie bei unterschiedlichen Beschleunigungen, bei dem wenigstens ein aktiver Flüssigkeitskühlkreislauf (14,15,16) in einer Kammer (11) angeordnet ist, der über wenigstens eine Sprüheinrichtung (12) ein zu verdampfendes Medium zugeführt und dort über eine adiabatische Entspannungsverdampfung versprüht wird, dadurch gekennzeichnet, daß jeder Kühlflüssigkeitskreislauf (14,15,16) aus einer quer zur Einspritzrichtung des zu verdampfenden Mediums gehalterten gitternetzartigen Anordnung von Kühlröhrchen (17,18,19) besteht, die einen das Medium bis zu dessen Verdampfung haltenden Kapillaraufbau (20,21,22) aufweist.

2. Verdampfungswärmetauscher nach Anspruch 1, dadurch gekennzeichnet, daß die Kühlröhrchen-Anordnung (17,18,19) wenigstens zwei separate, sich kreuzende Robrleitungen (29,30) aufweist.

3. Verdampfungswärmetauscher nach Anspruch 2, dadurch gekennzeichnet, daß jede Rohrleitung (29,30) aus parallelen Rohrleitungsabschnitten besteht, die über Umlenkabschnitte miteinander verbunden sind.

4. Verdampfungswärmetauscher nach einem der Ansprüche 1 bis 3, dadurch gekennzeichnet, daß wenigstens ein Flüssigkeitskühlkreislauf (14,15,16) eine Flüssigkeit abweisende dampfdurchlässige Kapillarschicht (23,24,25) aufweist, die in Anströmrichtung des zu verdampfenden Mediums hinter der Kühlröhrchen-Anordnung (17,18,19) angeordnet ist.

5. Verdampfungswärmetauscher nach Anspruch 4, dadurch gekennzeichnet, daß jeder Flüssigkeit abweisenden dampfdurchlässigen Kapillarschicht (23,24,25) eine siebartige Stützeinrichtung (26,27,28) zugeordnet ist.

6. Verdampfungswärmetauscher nach einem der Ansprüche 1 bis 5, dadurch gekennzeichnet, daß jeder von in Anströmrichtung des zu verdampfenden Mediums hintereinander angeordneten Flüssigkeitskühlkreisläufen (14,15,16) eine eigene Flüssigkeitsspeisung aufweist.

7. Verdampfungswärmetauscher nach einem der Ansprüche 1 bis 6, dadurch gekennzeichnet, daß in jede Sprüheinrichtung (12) ein mechanisches Druckerhöhungssystem integriert ist.

8. Verdampfungswärmetauscher nach einem der Ansprüche 1 bis 7, dadurch gekennzeichnet, daß die Einspeisung des zu verdampfenden Mediums in gepulster Form vorgesehen ist.

9. Verdampfungswärmetauscher nach einem der Ansprüche 1 bis 8, dadurch gekennzeichnet, daß dem zu verdampfenden Medium zur besseren Verteilung ein sich bei der Entspannung in der Sprüheinrichtung entmischendes Gas zugesetzt ist.

10. Verdampfungswärmetauscher nach einem der Ansprüche 1 bis 9, dadurch gekennzeichnet, daß dem zu verdampfenden Medium zur besseren Benetzung der Wärme übertragenden Oberflächen ein Benetzungsmittel zugesetzt ist.

## Claims

1. Evaporation heat exchanger (10) for the removal of heat in space vehicles under weightless conditions and with varying acceleration, in which at least one active fluid cooling circuit (14, 15, 16) is arranged in a chamber (11) to which is supplied by means of at least one spray device (12) a medium to be evaporated which is sprayed there by adiabatic flash evaporation characterised in that each cooling fluid circuit (14, 15, 16) comprises a lattice-like arrangement of cooling tubes (17, 18, 19) mounted transversely of the spraying direction of the medium to be evaporated, the arrangement having a capillary structure holding the medium until its evaporation.

2. Evaporation heat exchanger according to claim 1, characterised in that the cooling tube arrangement (17, 18, 19) has at least two separate, mutually-crossing pipe lines (29,30).

3. Evaporation heat exchanger according to claim 2, characterised in that each pipe line (29,30) consists of parallel piping sections, which are connected to each other by return sections.

4. Evaporation heat exchanger according to any one of claims 1 - 3, characterised in that at least one fluid cooling circuit (14, 15, 16) has a fluid rejecting vapour permeable capillary layer (23, 24, 25) which in the direction of flow of the medium to be evaporated is arranged behind the cooling tube arrangement (17,18,19).

5. Evaporation heat exchanger according to claim 4, characterised in that a sieve-like mounting device (26, 27, 28) is associated with each fluid rejecting vapour permeable capillary layer (23, 24, 25)

6. Evaporation heat exchanger according to any one of claims 1 to 5, characterised in that each of the fluid cooling circuits (14, 15, 16) arranged behind one another in the direction of flow of the medium to be evaporated has its own fluid supply.

7. Evaporation heat exchanger according to any one of claims 1 to 6, characterised in that a mechanical pressure-boosting system is integrated in each spray device (12).

8. Evaporation heat exchanger according to any one of claims 1 to 7, characterised in that the feed of the medium to be evaporated is supplied in pulsed form.

9. Evaporation heat exchanger according to any one of claims 1 to 8, characterised in that for better distribution there is added to the medium to be evaporated a gas which separates out in the spray device during the flashing.

10. Evaporation heat exchanger according to any one of claims 1 to 9, characterised in that for improved wetting of the heat transfer surfaces a wetting agent is added to the medium to be evaporated.

## Revendications

1. Echangeur de chaleur par vaporisation (10) destiné à évacuer de la chaleur dans des véhicules spatiaux en l'absence de gravité, ainsi que lors d'accélérations différentes, dans lequel est disposé au moins un circuit de refroidissement de liquide actif (14, 15, 16) dans une chambre (11), dans laquelle est amené, par au moins un dispositif de pulvérisation (12) un milieu à vaporiser, qui à cet endroit là, est pulvérisé par une vaporisation de détente adiabatique, caractérisé en ce que chaque circuit de liquide à refroidir (14, 15, 16) se compose d'un dispositif de petits tubes de refroidissement (17, 18, 19) en quadrillage, disposés transversalement par rapport au sens d'injection du milieu à vaporiser, dispositif qui comprend une structure capillaire (20, 21, 22) retenant le milieu jusqu'à sa vaporisation.

2. Echangeur de chaleur par vaporisation selon la revendication 1, caractérisé en ce que le dispositif de petits tubes de refroidissement (17, 18, 19) a au moins deux conduites tubulaires (29, 30) séparées et se croisant.

3. Echangeur de chaleur par vaporisation selon la revendication 2, caractérisé en ce que chaque conduite tubulaire (29, 30) se compose de tronçons, de conduite parallèles, qui sont reliés entre eux par des tronçons de renvoi.

4. Echangeur de chaleur par vaporisation selon une des revendications 1 à 3, caractérisé en ce qu'au moins un circuit de refroidissement de liquide (14, 15, 16) comporte une couche capillaire (23, 24, 25) refusant un liquide et perméable à la vapeur, qui est placée dans le sens du courant du milieu à vaporiser derrière le dispositif de petits tubes de refroidissement (17, 18, 19).

5. Echangeur de chaleur par vaporisation selon la revendication 4, caractérisé en ce qu'un dispositif de support (26, 27, 28) du type tamis est associé à chaque couche capillaire (23, 24, 25) refusant de liquide et perméable à la vapeur.

6. Echangeur de chaleur par vaporisation selon une des revendications 1 à 5, caractérisé en ce que chacun des circuits de refroidissement de liquide (14, 15, 16) disposés l'un derrière l'autre dans le sens d'entrée du flux du milieu à vaporiser comporte une alimentation propre en liquide.

7. Echangeur de chaleur par vaporisation selon une des revendications 1 à 6, caractérisé en ce que dans chaque dispositif de pulvérisation (12) est intégré un système mécanique d'élévation de la pression.

8. Echangeur de chaleur par vaporisation selon une des revendications 1 à 7, caractérisé en ce que l'alimentation du milieu à vaporiser est prévue sous forme pulsée.

9. Echangeur de chaleur par vaporisation selon une des revendications 1 à 8, caractérisé en ce qu'on ajoute au milieu à vaporiser, pour une meilleure distribution, un gaz se démixant lors de la détente dans le dispositif d'injection.

10. Echangeur de chaleur par vaporisation selon une des revendications 1 à 9, caractérisé en ce qu'on ajoute au milieu à vaporiser, pour un meilleur mouillage des surfaces transmettant la chaleur, un agent mouillant.
